# EUROPÄISCHE PATENTANMELDUNG

(11) **EP 1 383 237 A2**
(43) Veröffentlichungstag der Anmeldung: **21.01.2004**
(21) Anmeldenummer: 03013843.2
(22) Anmeldetag: 18.06.2003
(51) Int. Cl.: H03H 21/00

(54) **Adaptiver Entzerrer mit integrierter Anpassung des Ausgangspegels**

(30) Priorität: 18.07.2002 DE 10232702
(71) Anmelder: Infineon Technologies AG, 81669 München (DE)
(72) Erfinder: Gryska, Holger, 81737 München (DE)
(74) Vertreter: Graf Lambsdorff, Matthias, Dr.

(57) **Zusammenfassung**

Eine Filterverarbeitungseinheit (FIR) wird in ihrer Übertragungsfunktion durch einen Satz von Filterkoeffizienten (C0, CN) definiert, die in einer Koeffizienten-Aktualisierungseinheit (MX0-MXN, AX0-AXN, SRX0-SRXN) laufend aktualisiert werden. Der Pegel des Ausgangssignals wird durch eine Pegeleinstellungseinheit (K, BS, BS0-BSN) eingestellt, wobei ein Komparator (K) bei einem Überschreiten eines oberen Schwellwertes oder einem Unterschreiten eines unteren Schwellwert durch den größten Filterkoeffizienten Steuersignale an Koeffizienten-bezogene Schieber (BSO-BSN) und ein Datensignal-Schieber (BS) derart abgibt, dass diese die an ihnen anliegenden Bit-Folgen in gegenläufiger Weise verschieben und somit Multiplikationen oder Divisionen der anliegenden Datensignale um eine Faktor ≥ 2 bewirken.

## Beschreibung

Die vorliegende Erfindung betrifft ein Verfahren zur adaptiven Kanalentzerrung nach dem Oberbegriff des Patentanspruchs 1 und einen adaptiven Entzerrer zur Durchführung des Verfahrens.

Bei mobilen wie drahtgebundenen Kommunikationssystemen besteht ein schwerwiegendes Problem in der Mehr-Wege-Signalausbreitung. In einem Mobilkommunikationssystem beispielsweise gibt es zwischen einer Basisstation und einer Mobilstation in der Regel mehrere mögliche Signalausbreitungswege. Reflexion und Streuung von Signalwellen an Gebäuden, Bergen, Bäumen und anderen Hindernissen führen dazu, dass sich die Empfangsfeldstärke aus mehreren, im Allgemeinen unterschiedlich starken und unterschiedlich verzögerten Signalkomponenten zusammensetzt. Der Übertragungskanal zwischen der Basisstation und der Mobilstation kann zur Berücksichtigung der Mehr-Wege-Ausbreitung als ein Übertragungsfilterkanal mit Kanalkoeffizienten modelliert werden. Die mit den Kanalkoeffizienten gefilterten Sendesignale werden durch ein Rauschsignal überlagert, welches als additives, weißes Gauss-Rauschen angenommen wird. Von größerer Bedeutung ist jedoch die sogenannte Intersymbol-Interferenz (ISI), durch die bei den Empfangsdaten eine zeitliche Vermischung der ausgesendeten Sendesignale feststellbar ist. Die Intersymbol-Interferenz führt, sofern sie nicht kompensiert wird, zu hohen Bit-Fehlerraten.

In einem drahtgebundenen Kommunikationssystem kann beispielsweise im Bereich des digitalen Kabelfernsehens eine Mehr-Weg-Ausbreitung durch Dispersion und Reflexionen der Datensignale im Kabel auftreten. Am Ende eines nicht korrekt abgeschlossenen oder nicht angepassten Kabels können z.B.

Wellenreflexionen auftreten, die die Ursache entsprechender Verzögerungssignale beim Empfänger sind.

Zur Beseitigung der Intersymbol-Interferenz wird innerhalb des Empfängers ein Entzerrer eingesetzt. Bei Mobilkommunikationssystemen sind adaptive Entzerrer vonnöten, um der zeitlichen Veränderung des Mehr-Wege-Systems durch adaptive Anpassung der Kanalkoeffizienten Rechnung tragen zu können. Es kann sich dabei um einen linearen Entzerrer wie einen adaptiven FFE (Feet Forward Equalizer) bzw. DFE (Decision Feedback Equalizer) oder um sogenannte Viterbi-Entzerrer oder andere Maximum-Likelihood-Entzerrer handeln.

In an sich bekannter Weise schließt sich an den Entzerrer eine Entscheidungseinrichtung (e.g. Slicer) an, durch welche die eigentliche Signaldetektion vorgenommen wird. Zwischen Entzerrer und Entscheider ist im Stand der Technik eine Pegelanpassungsstufe erforderlich, welche den Pegel des Signals nach der Entzerrung, also der Entfernung der Störkomponenten, an den sich anschließenden Entscheider anpasst.

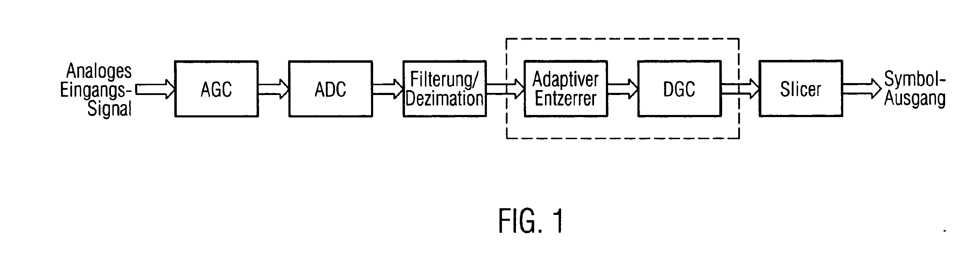

In der Fig. 1 ist ein Blockschema eines konventionellen Empfangssystems dargestellt. Das analoge Eingangssignal wird in einer automatischen Pegelanpassungsstufe (AGC, Automatic Gain Control) verstärkt, um den vollen dynamischen Bereich des Analog-/Digital-Konverters (ADC) ohne Kappung der Impulsspitzen zu nutzen. Die Filterungs-/Dezimations-Stufe begrenzt die Empfängerbandbreite durch Dezimation in Fällen der Überabtastung durch den ADC und durch Abschwächung von Störern außerhalb der Bandbreite. Der adaptive Entzerrer reduziert die Intersymbol-Interferenz (ISI), die durch den physikalischen Kanal eingeführt wurde und er versucht, die innerhalb der Bandbreite liegenden Störer abzuschwächen. Der AGC passt den Pegel des Signals an, wobei sämtliche Störer in ihrer Leistung erfasst werden. Nachdem diese Störer durch die Filterungs-/Dezimations-Stufe und den Entzerrer entfernt wurden, ist eine zweite Pegelanpassungsstufe erforderlich, um den Pegel an die Slicer-Pegel anzupassen. Diese Aufgabe wird von der DGC-Einheit (Digital Gain Control) übernommen. Der Slicer entscheidet auf der Basis seiner Schwellwerte und des Eingangssignals, welches Symbol aus dem Sendesymbol-Alphabet ausgesandt wurde. Diese Symbole werden dann an die folgenden Stufen wie e.g. die Fehlerkorrektur weitergegeben. Diese üblicherweise verwendete Aufgabenteilung hat zwei Nachteile. Da der Pegel in dem DGC nach dem Entzerrer kompensiert wird, muss der dynamische Bereich der Entzerrerkoeffizienten ausreichend groß für alle möglichen Pegeleinstellungsstufen sein. Dies erhöht jedoch den Implementierungsaufwand des komplexen Entzerrers. Die Trennung der Entzerrungs- und Pegeleinstellungsaufgaben hat den weiteren Nachteil, dass die DGC-Stufe einen eigenen Multiplizierer und einen eigenen Kontrollalgorithmus benötigt.

Die EP 0 524 560 B1, deren in die deutsche Sprache übersetzte Patentansprüche in Verbindung mit den Zeichnungsfiguren hiermit in den Offenbarungsgehalt der vorliegenden Anmeldung aufgenommen werden, offenbart ein Verfahren zum Aktualisieren von Filterkoeffizienten zur Eingabe an eine Filterstufe eines adaptiven Entzerrers, welcher beispielshalber als ein adaptiver FFE-Entzerrer (Feed Forward Equalizer) aufgebaut ist. Der adaptive Entzerrer weist eine Filterstufe auf, deren Übertragungsfunktion durch einen Satz von Filterkoeffizienten definiert ist, und ferner Aktualisierungsmittel zum Aktualisieren der Filterkoeffizienten als Antwort auf Fehlersignale, welche von einem Entzerrer-Datenausgangssignal abgeleitet werden. Die Aktualisierungsmittel umfassen eine Mehrzahl von aufeinander folgenden Verzögerungselementen, welche miteinander gekoppelt sind, um eine Mehrzahl von verzögerten Proben von nicht entzerrten Signaldaten bereitzustellen, die zur Verwendung beim Aktualisieren der Koeffizienten ausgegeben werden. Die Aktualisierungsmittel umfassen eine Mehrzahl von parallelen Verarbeitungspfaden für die Filterkoeffizienten, wobei in jedem der Verarbeitungspfade Mittel zum Anpassen der Pegel der aktualisierten Filterkoeffizienten vorgesehen sind.

In der DE 100 01 862 A1, welche hiermit vollständig in den Offenbarungsgehalt der vorliegenden Anmeldung einbezogen wird, ist ein adaptiver Entzerrer beschrieben, welcher eine Filterverarbeitungseinheit mit einer Mehrzahl von hintereinander geschalteten Verarbeitungsstufen aufweist, deren jede eine Abzweigung mit entsprechenden Abzweigungskoeffizienten bildet. Jede Verarbeitungsstufe enthält einen Multiplizierer, um ein Eingabesignal mit einem entsprechenden Abzweigungskoeffizienten zu multiplizieren, eine Verzögerungsstufe, die das Ausgabesignal einer vorhergehenden Verarbeitungsstufe verzögert, und einen Addierer, der das Ausgabesignal der Verzögerungsstufe derart mit dem Ausgabesignal des Multiplizierers addiert, dass das Additionsergebnis der nächsten Stufe bereitgestellt wird. Die erste Verarbeitungsstufe enthält einen Multiplizierer, der das Eingabesignal mit einem entsprechenden Abzweigungskoeffizienten zum Anlegen an die nächste Verarbeitungsstufe multipliziert. Der adaptive Entzerrer enthält ferner eine Abzweigungskoeffizienten-Setzschaltung zum Setzen eines Abzweigungskoeffizienten entsprechend einem Fehler zwischen einem Ausgabesignal der Filterverarbeitungsstufe und einem Referenzsignal. Die Abzweigungskoeffizienten-Setzschaltung enthält eine Koeffizientenkorrekturstufe, die entsprechend für jeden Abzweigungskoeffizienten vorgesehen ist. Jede Koeffizientenkorrekturstufe weist den gleichen Aufbau auf und enthält einen Multiplizierer, in welchem ein je nach der Anzahl vorhergehender Stufen verzögertes Eingabesignal mit dem Fehlersignal und einer sogenannten Schrittgröße multipliziert wird, wobei die Schrittgröße für jede Koeffizientenkorrekturstufe dieselbe ist.

Es ist Aufgabe der vorliegenden Erfindung, einen adaptiven Entzerrer und ein Verfahren zur adaptiven Kanalentzerrung anzugeben, durch welche der Implementierungsaufwand des Entzerrers verringert werden kann. Insbesondere ist es Aufgabe der vorliegenden Erfindung, den Implementierungsaufwand durch Integration der Entzerrungsund Pegelanpassungs-Funktionen innerhalb des Entzerrers zu reduzieren und eine hierfür geeignete Schaltungskonfiguration anzugeben.

Diese Aufgabe wird durch die kennzeichnenden Merkmale des Patentanspruchs 1 gelöst. Vorteilhafte Ausgestaltungen und Weiterbildungen sind in den Unteransprüchen angegeben.

In einem adaptiven Entzerrer zur Durchführung des erfindungsgemäßen Verfahrens ist eine Pegeleinstellungsstufe integriert und somit sind die Entzerrungsfunktion und die Pegeleinstellungsfunktion in aufwandsgünstiger Weise schaltungstechnisch zusammengelegt. Der Implementierungsaufwand der Empfängerschaltung kann somit bedeutend reduziert werden. Das erfindungsgemäße Verfahren kann auf einen adaptiven FFE-Entzerrer (Feed Forward Equalizer) bzw. einen DFE-Entzerrer (Decision Feedback Equalizer) angewendet werden. In bisherigen Schaltungsanwendungen schließt sich an den Entzerrer eine separate Pegeleinstellungsstufe (DGC) an, die unabhängig vom Entzerrer den Signalpegel an die Schwellen des Entscheiders anpasst. Die Erfindung schafft nun die Möglichkeit, die beschränkte Tracking-Fähigkeit des adaptiven Entzerrers zu erweitern und mit der separaten Pegeleinstellungsstufe zu kombinieren, wodurch der Implementierungsaufwand erheblich reduziert wird. Der separate Multiplizierer der Pegeleinstellungsstufe entfällt und wird durch ein einfaches, mit dem Ausgang der Filterverarbeitungseinheit verbundenes Datensignal-Schieber (Shifter) ersetzt. Die separate Kontroll-Logik der Pegeleinstellungsstufe entfällt. Durch die Kombination kann der Dynamikbereich des Entzerrers eingeschränkt werden, so dass die Filterkoeffizientenspeicher entsprechend kleiner ausfallen können.

Der erfindungsgemäße adaptive Entzerrer zur Durchführung des Verfahrens weist in an sich bekannter Weise eine Aktualisierungseinheit mit einer Anzahl Koeffizientenbezogener Verarbeitungspfade auf, die jeweils einen Schieber enthalten. Falls der größte der Filterkoeffizienten zu groß wird, werden die Koeffizienten-bezogenen Schieber dazu veranlasst, die Bit-Folgen der Filterkoeffizienten um eine Bit-Position nach unten zu schieben und somit die Filterkoeffizienten zu halbieren. Gleichzeitig wird der mit dem Ausgang der Filterverarbeitungseinheit verbundene Datensignal-Schieber veranlasst, die Bit-Folge des Ausgangssignals um eine Bit-Position nach oben zu verschieben.

Falls der größte Filterkoeffizient zu klein wird, werden die Koeffizienten-bezogenen Schieber veranlasst, die Bit-Folgen der Filterkoeffizienten um eine Bit-Position nach oben zu verschieben und somit die Filterkoeffizienten zu verdoppeln. Gleichzeitig wird der mit dem Ausgang der Filterverarbeitungseinheit verbundene Datensignal-Schieber veranlasst, die Bit-Folge des Ausgangssignals um eine Bit-Position nach unten zu verschieben und somit zu halbieren.

Die Koeffizienten-bezogenen Schieber einerseits und der Datensignal-Schieber andererseits führen somit gegenläufige Verschiebungen der an ihnen anliegenden Bit-Folgen aus, sobald festgestellt wird, dass der Wert des größten Filterkoeffizienten zu groß oder zu klein wird.

Für die Feststellung, ob der größte Filterkoeffizient zu groß oder zu klein wird, wird ein unterer und ein oberer Schwellwert vorgegeben und die Anzahl Filterkoeffizienten mit diesen Schwellwerten verglichen. Zu diesem Zweck kann ein Komparator vorgesehen sein, welchem die Filterkoeffizienten zugeführt werden. Der Komparator ermittelt den größten Filterkoeffizienten, wenn dessen Position nicht schon a priori bekannt ist, und vergleicht diesen mit dem unteren und dem oberen Schwellwert. Der obere Schwellwert ist beispielsweise der größte positive Wert, der im Koeffizientenspeicher abgelegt werden kann, der untere Schwellwert die Hälfte davon. Falls es zu einem Unterschreiten des unteren Schwellwerts bzw. einem Überschreiten des oberen Schwellwerts kommt, veranlasst der Komparator die Koeffizienten-bezogenen Schieber und den Datensignal-Schieber, Verschiebungen der Bit-Folgen in der beschriebenen gegenläufigen Weise auszuführen.

Die in dem erfindungsgemäßen adaptiven Entzerrer verwendete Filterverarbeitungseinheit ist in der allgemeinsten Form der Erfindung eine Filterverarbeitungseinheit wie beispielsweise ein FIR-Filter (Finite Impuls Response), dessen Übertragungsfunktion durch einen Satz von Filterkoeffizienten definiert ist.

Der adaptive Entzerrer kann als FFE-Entzerrer (Feed Forward Equalizer) ausgebildet sein, wobei die Filterverarbeitungseinheit eine Mehrzahl von hintereinander geschalteten Verarbeitungsstufen aufweist, wobei jede der Verarbeitungsstufen ein Verzögerungsglied zum Verzögern eines Ausgabesignals einer vorhergehenden Verarbeitungsstufe, einen Multiplizierer zum Multiplizieren des Ausgabesignals der Verzögerungsstufe mit einem entsprechenden Filterkoeffizienten und einen Addierer zum Addieren eines Ausgabesignals des Multiplizierers und eines Additionsergebnisses der vorhergehenden Verarbeitungsstufe derart aufweist, dass der nachfolgenden Verarbeitungsstufe ein Additionsergebnis bereitgestellt wird.

Die Aktualisierung der Filterkoeffizienten wird in einer Koeffizienten-Aktualisierungseinheit durchgeführt, welche aus einer Anzahl von Koeffizienten-Aktualisierungsstufen aufgebaut ist. Jede Koeffizienten-Aktualisierungsstufe weist ein Verzögerungsglied zum Verzögern eines Ausgabesignals einer vorhergehenden Koeffizienten-Aktualisierungsstufe, einen mit der Filterverarbeitungseinheit verbundenen Koeffizientenspeicher, einen Multiplizierer zum Multiplizieren des verzögerten Signals mit dem Fehlersignal und einem Aktualisierungsfaktor und einen Addierer zum Addieren des Ausgabesignals des Multiplizierers und dem Wert des in dem Koeffizientenspeicher gespeicherten Filterkoeffizienten auf.

Die in den Koeffizienten-Aktualisierungsstufen enthaltenen Verzögerungsglieder können dabei identisch mit den in den Verarbeitungsstufen der Filterverarbeitungseinheit enthaltenen Verzögerungsgliedern sein.

In einer bevorzugten Ausführungsvariante des erfindungsgemäßen Verfahrens ist vorgesehen, dass jede Koeffizienten-Aktualisierungseinheit einen eigenen, unabhängig einstellbaren Aktualisierungsfaktor aufweist. In dem eingangs erwähnten Stand der Technik (DE 100 01 862 A1) ist dieser Aktualisierungsfaktor (Schrittgröße) konstant und für alle Koeffizienten-Aktualisierungseinheiten gleich. Diese erfindungsgemäße Variante kann dafür verwendet werden, zwei verschiedene Pegeladaptionphasen einzuführen, nämlich eine initiale Adaptionsphase und eine sich daran anschließende normale Adaptionsphase. Die initiale Adaptionsphase zeichnet sich dadurch aus, dass verschiedene Aktualisierungsfaktoren angelegt werden, deren Größe der Größe der jeweils aktuellen Filterkoeffizienten entspricht. Anfänglich werden die Schieber mit einem Satz Filterkoeffizienten beladen, bei welchen z.B. nur der zentrale Filterkoeffizient von Null verschieden ist. Im Folgenden während der initialen Pegeladaptionsphase werden also den Multiplizierern in den Koeffizienten-Aktualisierungsstufen jeweils Aktualisierungsfaktoren zugeführt, deren Größe proportional der Größe des jeweils in der entsprechenden Stufe aktuellen Filterkoeffizienten ist. Dies hat den Vorteil, dass sich die Form des Anfangskoeffizienten-Templates während der initialen Adaptionsphase nur relativ wenig verändert und somit die Stabilität des Adaptionsalgorithmus gewährleistet wird. In der zweiten normalen Adaptionsphase sind dann alle Aktualisierungsfaktoren gleich.

Im Folgenden wird ein Ausführungsbeispiel für einen erfindungsgemäßen adaptiven Entzerrer unter Bezugnahme auf die Zeichnungsfiguren näher erläutert. Es zeigen:
- Fig. 1: ein Blockschema eines Empfängerkonzepts nach dem Stand der Technik;
- Fig. 2: eine Schaltungsanordnung eines erfindungsgemäßen adaptiven Entzerrers,
- Fig. 3: eine vektorisierte Darstellung des adaptiven Entzerrers der Fig. 2;
- Fig. 4: eine grafische Darstellung der Filterkoeffizienten und ihrer Beziehung zu den Schwellwerten.

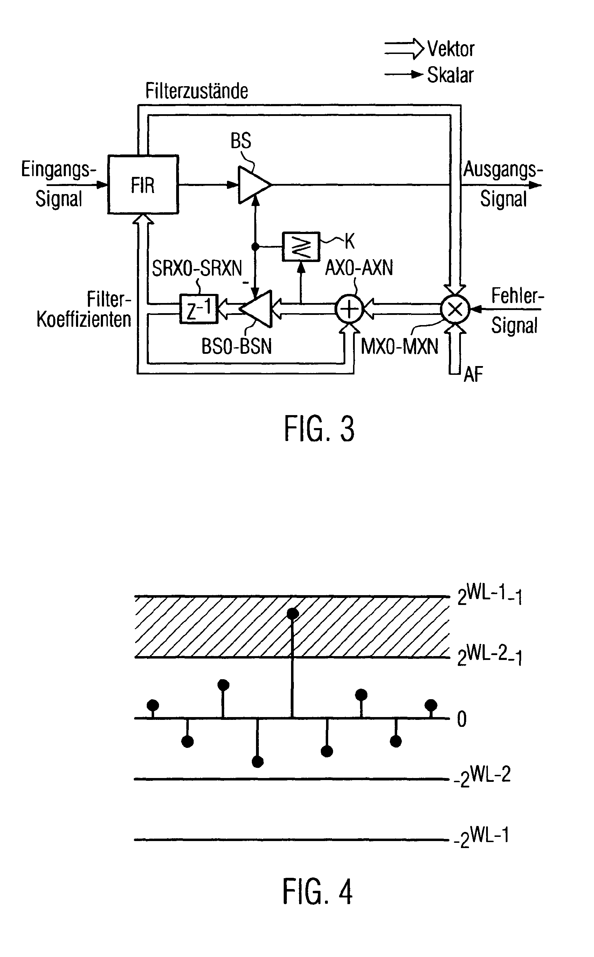

In der Fig. 3 ist ein Ausführungsbeispiel eines erfindungsgemäßen adaptiven Entzerrers dargestellt, die Filterverarbeitungseinheit ist dabei in ihrer allgemeinsten Form durch ein FIR-Filter repräsentiert, deren Übertragungsfunktion durch einen Satz von Filterkoeffizienten definiert ist, die mit der Filter-Taktrate aktualisiert werden. Dem FIR-Filter wird ein Eingangssignal zugeführt und ein Ausgangssignal wird einem Datensignal-Schieber BS zugeführt, welcher Teil einer noch zu erläuternden Pegeleinstellungseinheit ist.

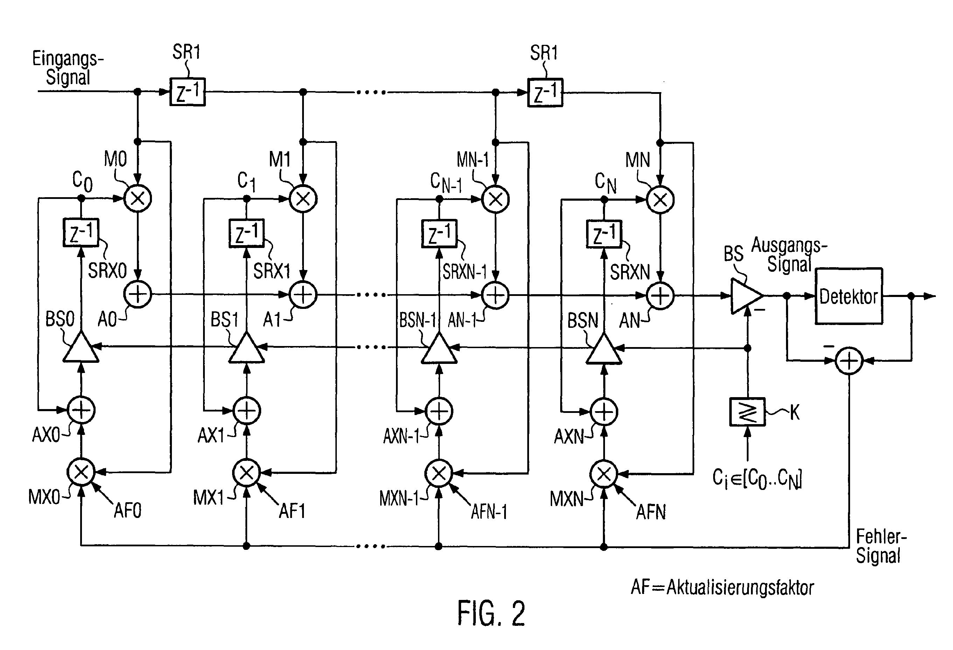

In der Fig. 2 ist der adaptive Entzerrer der Fig. 3 in skalarer Form dargestellt, wobei als FIR-Filter ein adaptiver FFE (Feed Forward Equalizer) eingesetzt ist. Dieser ist in an sich bekannter Weise durch Verzögerungsglieder SR1-SRN, Multiplizierer M0-MN und Addierer A0-AN (A0 kann weggelassen werden) aufgebaut. Der FFE kann aufgefasst werden als N hintereinander geschaltete Verarbeitungsstufen, wobei jede der Verarbeitungsstufen ein Verzögerungsglied SR1-SRN, einen Multiplizierer M1-MN und einen Addierer A1-AN aufweist, wobei die dargestellte Ausführungsform eine erste Verarbeitungsstufe enthält, die einen Multiplizierer M0 aufweist, welcher das unverzögerte Eingangssignal mit einem Filterkoeffizienten C0 multipliziert und das Multiplikationsergebnis dem Addierer A1 der zweiten Verarbeitungsstufe zuführt. Ebenso führen die Multiplizierer M1-MN Multiplikationen mit entsprechenden Filterkoeffizienten C1-CN aus und führen die Multiplikationsergebnisse den Addierern A1-AN zu, wobei die Addierer A1-AN das Ausgabesignal der Multiplizierer M1-MN mit dem Additionsergebnis der jeweils vorhergehenden Verarbeitungsstufe addieren, so dass der nachfolgenden Verarbeitungsstufe ein weiteres Additionsergebnis bereitgestellt wird.

Der adaptive Entzerrer der Figuren 2 und 3 weist ferner eine Koeffizienten-Aktualisierungseinheit auf, welche eine Anzahl N+1 Koeffizienten-Aktualisierungsstufen aufweist. Diese sind aus Multiplizierern MX0-MXN, Addierern AX0-AXN und Koeffizientenspeichern SRX0-SRXN aufgebaut. Die als Teil der Filterverarbeitungsstufen bereits beschriebenen Verzögerungsglieder SR1-SRN haben ebenfalls essentielle Bedeutung für Koeffizienten-Aktualisierungsstufen und können somit gleichermaßen als Bestandteile der Koeffizienten-Aktualisierungsstufen angesehen werden. Es kann ebenso vorgesehen sein, dass die Koeffizienten-Aktualisierungsstufen eigene Verzögerungsglieder aufweisen, wie dies beispielsweise in der Fig. 11 der DE 100 01 862 A1 gezeigt ist, die hiermit in den Offenbarungsgehalt der vorliegenden Anmeldung aufgenommen wird.

Die Filterkoeffizienten werden als Antwort auf ein Fehlersignal aktualisiert, welches von einem Ausgangssignal des Entzerrers abgeleitet wird. In jeder Koeffizienten-Aktualisierungsstufe wird ein Ausgabesignal einer vorhergehenden Koeffizienten-Aktualisierungsstufe in vorbestimmter Weise durch ein Verzögerungsglied SR1-SRN verzögert, das verzögerte Signal wird mit dem Fehlersignal multipliziert und das Multiplikationsergebnis in einem Addierer AX0-AXN mit einem in einem Koeffizientenspeicher SRX0-SRXN gespeicherten Wert des entsprechenden Filterkoeffizienten addiert. Den Multiplizierern MX0-MXN werden ebenfalls Koeffizienten-spezifische Aktualisierungsfaktoren AF0-AFN zugeführt. Das Fehlersignal wird aus einer Entscheidungsrückkopplung gewonnen, indem das entzerrte Ausgangssignal einem Detektor in Form eines Entscheiders oder Slicers zugeführt und in einem Addierer dessen Eingangssignal von dessen Ausgangssignal subtrahiert wird.

Der adaptive Entzerrer weist ferner eine Pegeleinstellungseinheit auf, welche einen Komparator K zum Vergleich des größten Filterkoeffizienten mit einem unteren und einem oberen Schwellwert, Koeffizienten-bezogene Schieber BS0-BSN in den Koeffizienten-Aktualisierungsstufen und einen Datensignal-Schieber BS am Ausgang der Filterverarbeitungseinheit aufweist. Die Steuereingänge der Koeffizienten-bezogenen Schieber BS0-BSN und des Datensignal-Schiebers BS (mit invertiertem Vorzeichen) sind mit einem Ausgang des Komparators K verbunden. Dem Eingang des Komparators K werden die Filterkoeffizienten zugeführt. Der Komparator K bestimmt daraus jeweils den größten Filterkoeffizienten, wenn die Position des größten Filterkoeffizienten nicht bereits a priori bekannt ist, und vergleicht diesen mit einem unteren und einem oberen Schwellwert. Der obere Schwellwert kann beispielsweise der größte positive Wert sein, der im Koeffizientenspeicher abgelegt werden kann, während der untere Schwellwert die Hälfte davon sein kann. Beim Überschreiten des oberen Schwellwertes veranlasst er die Koeffizienten-bezogenen Schieber BS0-BSN dazu, die Bit-Folgen der Filterkoeffizienten jeweils um eine Bit-Position nach unten zu verschieben und gleichzeitig veranlasst der Komparator K den Datensignal-Schieber BS dazu, die Bit-Folge des Ausgangssignals der Filterverarbeitungseinheit um eine Bit-Position nach oben zu verschieben. Falls dagegen der Komparator K feststellt, dass der größte Filterkoeffizient den unteren Schwellwert unterschreitet, so veranlasst er die Koeffizienten-bezogenen Schieber BS0-BSN dazu, die Bit-Folgen der Filterkoeffizienten jeweils um eine Bit-Position nach oben zu verschieben und gleichzeitig veranlasst der Komparator K den Datensignal-Schieber dazu, die Bit-Folge des Ausgangssignals der Filterverarbeitungseinheit um eine Bit-Position nach unten zu verschieben.

In der Fig. 4 ist beispielshalber eine grafische Darstellung von neun Filterkoeffizienten in einem Diagramm gezeigt, wobei der Bereich zwischen einem oberen und einen unteren Schwellwert schraffiert gekennzeichnet ist. Gezeigt ist eine Momentaufnahme, in welcher der höchste Filterkoeffizient sich innerhalb des schraffierten Bereichs, also unterhalb des oberen Schwellwertes und oberhalb des unteren Schwellwertes befindet. In dieser Situation wird durch den Komparator K kein Ausgangssignal an die Steuereingänge der Koeffizienten-bezogenen Schieber BS0-BSN und des Datensignal-Schiebers BS abgegeben. Es ist das Ziel, den höchsten Filterkoeffizienten in dem schraffierten Bereich zu halten. Wenn der höchste Filterkoeffizient den oberen Schwellwert 2^{WL-1}-1 überschreitet, so werden alle Filterkoeffizienten infolge der Verschiebung der Bit-Folgen durch zwei dividiert und der höchste Filterkoeffizient befindet sich danach erneut in dem schraffierten Bereich. Um den durch diese Koeffizienten-Skalierung verursachten Abfall des Ausgangspegels um 3 dB zu kompensieren, wird das Ausgangssignal des FFE-Filters zur gleichen Zeit mit zwei multipliziert. Wie bereits erwähnt, geschieht dies dadurch, dass der Komparator K den Datensignal-Schieber BS dazu veranlasst, die Bit-Folge des anliegenden Signals um eine Bit-Position nach oben zu verschieben. Falls der höchste Filterkoeffizient unter den unteren Schwellwert 2^{WL-2}-1 fällt, werden die Filterkoeffizienten durch die bereits erläuterten Bit-Verschiebungsvorgänge in den Koeffizienten-bezogenen Schiebern verdoppelt und das Ausgangssignal des FFE-Filters wird durch den Datensignal-Schieber BS durch zwei geteilt.

Die der Fig. 2 als einzelne Bauelemente dargestellten Koeffizienten-bezogenen Schieber BS0-BSN können Hardwaremäßig auch durch einen integrierten Vektor-Schieber gebildet sein.

Die Koeffizienten-bezogenen Schieber BS0-BSN und der Datensignal-Schieber BS können durch sogenannte barrel shifter gebildet sein. Ein barrel shifter ist ein spezieller Schieber, welcher das Verschieben (genauer Rotieren) um eine beliebige Anzahl von Bits erlaubt. Es kann somit auch beispielsweise eine Verschiebung von zwei Bits, also eine Multiplikation oder Division um den Faktor 4 herbeigeführt werden. Eine Verschiebung um eine Bit-Position entspricht einer Verdoppelung oder Halbierung der Filterkoeffizienten und somit eine Veränderung von deren Pegeln in Stufen von 3 dB. Die Feineinstellung der Pegel wird dann durch die adaptive Anpassung der Filterkoeffizienten herbeigeführt. Im Ergebnis kann somit die Größe der Koeffizientenspeicher SRX0-SRXN reduziert werden. Die Koeffizientenspeicher SRX0-SRXN sind in der Fig. 2 mit derselben Schaltsymbolik wie die Verzögerungsglieder dargestellt.

Die Anpassung der Filterkoeffizienten basiert auf einem Fehleralgorithmus, z.B. dem an sich bekannten LMS-Algorithmus (s. Kapitel 5.7.2 "Iterative Entzerrereinstellung nach dem LMS-Algorithmus" aus dem Buch "Nachrichtenübertragung" von K. D. Kammeyer, Teubner Stuttgart). Das Fehlerkriterium, welches durch den adaptiven Entzerrer zu minimieren ist, wird durch einen Aktualisierungsfaktor AF0-AFN gewichtet, welcher für jeden Fehlerkoeffizienten separat gewählt werden kann und in den Multiplizierern MX0-MXN mit dem Fehlersignal und den verzögerten Eingangssignalen multipliziert wird. Der Vektor der Aktualisierungsfaktoren AF0-AFN hat somit die Dimension der Filterordnung.

## Patentansprüche

1. Verfahren zur adaptiven Kanalentzerrung, bei welchem
- eine Filterverarbeitungseinheit verwendet wird, deren Übertragungsfunktion durch einen Satz von Filterkoeffizienten (C0-CN) definiert ist, und
- die Filterkoeffizienten (C0-CN) als Antwort auf ein Fehlersignal aktualisiert werden, welches von einem Ausgangssignal des Entzerrers abgeleitet wird, und
- der Ausgangssignalpegel der Filterverarbeitungseinheit eingestellt wird,
**dadurch gekennzeichnet, dass**
- der größte Filterkoeffizient mit einem unteren und einem oberen Schwellwert verglichen wird, und
- beim Überschreiten des oberen Schwellwerts die Bit-Folgen der Filterkoeffizienten (C0-CN) jeweils um eine Bit-Position nach unten verschoben werden und gleichzeitig die Bit-Folge des Ausgangssignals der Filterverarbeitungseinheit um eine Bit-Position nach oben verschoben wird, und
- beim Unterschreiten des unteren Schwellwerts die Bit-Folgen der Filterkoeffizienten (C0-CN) jeweils um eine Bit-Position nach oben verschoben werden und gleichzeitig die Bit-Folge des Ausgangssignals der Filterverarbeitungseinheit um eine Bit-Position nach unten verschoben wird.

2. Verfahren nach Anspruch 1,
**dadurch gekennzeichnet, dass**
- eine Filterverarbeitungseinheit verwendet wird, welche eine Mehrzahl (N) von Verarbeitungsstufen aufweist, wobei in jeder der Verarbeitungsstufen
- ein Ausgabesignal einer vorhergehenden Verarbeitungsstufe in vorbestimmter Weise verzögert wird,
- das verzögerte Signal mit einem Filterkoeffizienten (C1-CN) multipliziert wird, und vorhergehenden Verarbeitungsstufe derart addiert wird, dass der nachfolgenden Verarbeitungsstufe ein Additionsergebnis bereitgestellt wird.

3. Verfahren nach Anspruch 2,
**dadurch gekennzeichnet, dass**
- in einer ersten Verarbeitungsstufe das Eingangssignal mit einem entsprechenden Filterkoeffizienten multipliziert und das Multiplikationsergebnis an den Addierer (A1) der zweiten Verarbeitungsstufe geliefert wird.

4. Verfahren nach einem der vorhergehenden Ansprüche,
**dadurch gekennzeichnet, dass**
- für jeden Filterkoeffizienten (C0-CN) eine Koeffizienten-Aktualisierungsstufe vorgesehen ist und in jeder Koeffizienten-Aktualisierungsstufe ein Ausgabesignal einer vorhergehenden Koeffizienten-Aktualisierungsstufe in vorbestimmter Weise verzögert wird,
- das verzögerte Signal mit dem durch einen Aktualisierungsfaktor gewichteten Fehlersignal multipliziert wird, und
- das Multiplikationsergebnis mit einem gespeicherten Wert des entsprechenden Filterkoeffizienten (C0-CN) addiert wird.

5. Verfahren nach Anspruch 4,
**dadurch gekennzeichnet, dass**
- das Additionsergebnis Koeffizienten-bezogenen Schiebern (BS0-BSN) zugeführt wird,
- das Ausgangssignal der Filterverarbeitungseinheit einem Datensignal-Schieber (BS) zugeführt wird,
- den Steuereingängen der Koeffizienten-bezogenen Schieber (BS0-BSN) und mit invertiertem Vorzeichen des Datensignal-Schiebers (BS) Steuersignale zugeführt werden, falls der größte Filterkoeffizient den oberen Schwellwert überschreitet oder den unteren Schwellwert unterschreitet.

6. Verfahren nach Anspruch 4 oder 5,
**dadurch gekennzeichnet, dass**
- das verzögerte Signal mit dem Fehlersignal und mit einem Aktualisierungsfaktor (AF0-AFN) multipliziert wird.

7. Verfahren nach Anspruch 6,
**dadurch gekennzeichnet, dass**
- der Aktualisierungsfaktor (AF0-AFN) für jede Koeffizienten-Aktualisierungsstufe unabhängig einstellbar ist.

8. Verfahren nach Anspruch 7,
**dadurch gekennzeichnet, dass**
- in einer ersten Pegelanspassungsphase die Aktualisierungsfaktoren (AF0-AFN) in ihrer Größe entsprechend der Größe der in den entsprechenden Koeffizienten-Aktualisierungsstufen anfangs gespeicherten Filterkoeffizienten eingestellt werden, und
- in einer zweiten Pegelanspassungsphase die Größe der Aktualisierungsfaktoren (AF0-AFN) untereinander gleich eingestellt wird.

9. Adaptiver Entzerrer zur Durchführung des Verfahrens nach einem der vorhergehenden Ansprüche, mit
- einer Filterverarbeitungseinheit, deren Übertragungsfunktion durch einen Satz von Filterkoeffizienten (C0-CN) definiert ist, und
- eine Koeffizienten-Aktualisierungseinheit mit einer Anzahl Koeffizienten-Aktualisierungsstufen, und
- einer Pegeleinstellungseinheit (K, BS, BS0-BSN),
**dadurch gekennzeichnet, dass**
- die Pegeleinstellungseinheit aufweist:
- einen Komparator (K) zum Vergleich des größten Filterkoeffizienten mit einem unteren und einem oberen Schwellwert,
- Koeffizienten-bezogene Schieber (BS0-BSN) deren Steuereingänge mit dem Komparator (K) verbunden sind, und
- ein Datensignal-Schieber (BS) am Ausgang der Filterverarbeitungseinheit, dessen Steuereingang mit dem Komparator (K) verbunden ist (mit invertiertem Vorzeichen).

10. Adaptiver Entzerrer nach Anspruch 9,
**dadurch gekennzeichnet, dass**
- die Filterverarbeitungseinheit eine Mehrzahl (N) von hintereinander geschalteten Verarbeitungsstufen aufweist, wobei jede der Verarbeitungsstufen aufweist:
- ein Verzögerungsglied (SR1-SRN) zum Verzögern eines Ausgabesignals einer vorhergehenden Verarbeitungsstufe,
- einen Multiplizierer (M1-MN) zum Multiplizieren des verzögerten Signals mit einem entsprechenden Filterkoeffizienten (C1-CN),
- einen Addierer (A1-AN) zum Addieren eines Ausgabesignals des Multiplizierers (M1-MN) und eines Additionsergebnisses der vorhergehenden Verarbeitungsstufe derart, dass der nachfolgenden Verarbeitungsstufe ein Additionsergebnis bereitgestellt wird.

11. Adaptiver Entzerrer nach Anspruch 10,
**dadurch gekennzeichnet, dass**
- eine erste Verarbeitungsstufe einen Multiplizierer (M0) zum Multiplizieren des Eingangssignals mit einem entsprechenden Filterkoeffizienten (C0) aufweist, wobei
- der erste Multiplizierer (M0) mit dem Addierer (A1) der zweiten Verarbeitungsstufe verbunden ist.

12. Adaptiver Entzerrer nach einem der Ansprüche 9 bis 11,
**dadurch gekennzeichnet, dass**
- jede Koeffizienten-Aktualisierungsstufe aufweist:
- ein Verzögerungsglied (SR1-SRN) zum Verzögern eines Ausgabesignals einer vorhergehenden Koeffizienten-Aktualisierungsstufe,
- einen mit der Filterverarbeitungseinheit verbundenen Koeffizientenspeicher (SRX0-SRXN),
- einen Multiplizierer (MX0-MXN) zum Multiplizieren des verzögerten Signals mit dem Fehlersignal,
- einen Addierer (AX1-AXN) zum Addieren des Ausgabesignals des Multiplizierers (MX0-MXN) und dem Wert des in dem Koeffizientenspeicher (SRX0-SRXN) gespeicherten Filterkoeffizienten (C0-CN).

13. Adaptiver Entzerrer nach Anspruch 12,
**dadurch gekennzeichnet, dass**
- ein Ausgang des Addierers (AX0-AXN) mit einem Eingang des Schiebers (BS0-BSN) verbunden ist,
- ein Ausgang des Schiebers (BS0-BSN) mit dem Eingang des Koeffizientenspeichers (SRX0-SRXN) verbunden ist,
- Steuereingänge des Schiebers (BS0-BSN) mit einem Ausgang des Komparators (K) verbunden sind,
- der Ausgang der Filterverarbeitungseinheit mit einem Schieber (BS) verbunden ist, und
- ein Steuereingang des Schiebers (BS) mit einem Ausgang des Komparators (K) verbunden ist (mit invertiertem Vorzeichen).
